# EUROPEAN PATENT APPLICATION

(11) **EP 2 852 168 A1**
(43) Date of publication of application: **25.03.2015**
(21) Application number: 13809506.2
(22) Date of filing: 29.06.2013
(51) Int. Cl.: H04N 21/254, H04N 21/435, H04N 21/431, H04N 21/485, H04N 21/237, H04N 21/2343, H04N 21/4402, H04N 21/43, H04N 21/8547, H04N 21/81

(54) **VIDEO PROCESSING METHOD, TERMINAL AND CAPTION SERVER**

(30) Priority: 29.06.2012 CN 201210222137
(71) Applicant: Huawei Device Co., Ltd., Longgang District Shenzhen Guangdong 518129 (CN)
(72) Inventor: GAO, Wenmei, Shenzhen Guangdong 518129 (CN); FAN, Shunan, Shenzhen Guangdong 518129 (CN); LV, Xiaoqiang, Shenzhen Guangdong 518129 (CN); WANG, Yahui, Shenzhen Guangdong 518129 (CN)
(74) Representative: Thun, Clemens
(86) International application number: PCT/CN2013/078482
(87) International publication number: WO 2014/000703

(57) **Abstract**

The present invention provides a video processing method, a terminal, and a caption server. The method includes: receiving a video program stream corresponding to a video program; requesting, from a caption server, obtaining of a caption corresponding to the video program stream; receiving the caption corresponding to the video program stream and returned by the caption server; and displaying the video program and the caption. In the present invention, a caption is obtained in real time according to a video program.

## Description

### CROSS-REFERENCE TO RELATED APPLICATION

This application claims priority to Chinese Patent Application No. 201210222137.2, filed with the Chinese Patent Office on June 29, 2012 and entitled "VIDEO PROCESSING METHOD, TERMINAL, AND CAPTION SERVER", which is incorporated herein by reference in its entirety.

### TECHNICAL FIELD

The present invention relates to communications technologies, and in particular, to a video processing method, a terminal, and a caption server.

### BACKGROUND

Current television dramas, movies, and the like gradually use captions as a standard configuration. However, in actual situations, a lot of video programs, for example, a news program, a variety show, and a sports program, are not configured with captions. In particular, for a live program, captions cannot be edited while the program is broadcast. In addition, a lot of video programs on the Internet do not have captions; and though some video programs have captions, captions are not provided all the time. Therefore, audiences have difficulties in watching video programs without captions, and especially, hearing impaired persons cannot watch the video programs without captions and cannot enjoy the video programs.

### SUMMARY

The present invention provides a video processing method, a terminal, and a caption server, so as to obtain a caption in real time according to a video program.

A first aspect of the present invention provides a video processing method, including:
receiving a video program stream corresponding to a video program, and requesting, from a caption server, obtaining of a caption corresponding to the video program stream; and
receiving the caption returned by the caption server, and displaying the video program and the caption.

In one possible implementation manner, the requesting, from a caption server, obtaining of a caption corresponding to the video program stream includes: sending a caption obtaining request to the caption server, where the caption obtaining request is used to request obtaining of the caption corresponding to the video program stream; and sending an audio stream in the video program stream to the caption server, so that the caption server performs speech-to-text conversion on the audio stream according to the caption obtaining request to generate the caption.

In another possible implementation manner, the received video program stream further includes a program identifier of the video program; and the requesting, from a caption server, obtaining of a caption corresponding to the video program stream includes: sending a caption obtaining request to the caption server, where the caption obtaining request is used to request obtaining of the caption corresponding to the video program stream, and the caption obtaining request carries the program identifier, so that the caption server determines the caption according to the caption obtaining request and the program identifier.

In another possible implementation manner, after the sending a caption obtaining request to the caption server and before the receiving the caption returned by the caption server, the method further includes: receiving a connection failure response sent by the caption server, where the connection failure response is used to indicate that the caption server fails to connect to a program source according to the program identifier to obtain the audio stream, and the program source is used to generate the video program stream; and sending the audio stream in the video program stream to the caption server according to the connection failure response, so that the caption server performs speech-to-text conversion on the audio stream to generate the caption.

In another possible implementation manner, after the receiving a video program stream corresponding to a video program and before the displaying the video program and the caption, the method further includes: buffering the received video program stream corresponding to the video program at least until the caption corresponding to the video program stream and returned by the caption server is received.

In another possible implementation manner, the received caption corresponding to the video program stream and returned by the caption server further includes a packet identifier of an audio packet corresponding to the caption; and after the receiving the caption corresponding to the video program stream and returned by the caption server and before the displaying the video program and the caption, the method further includes: synchronizing the caption with the audio stream according to the packet identifier of the audio packet, so as to display the video program and the caption synchronously.

A second aspect of the present invention provides a video processing method, including:
receiving a request sent by a terminal and used to obtain a caption corresponding to a video program stream that corresponds to a video program; and
obtaining, according to the request, the caption corresponding to the video program stream, and returning the caption to the terminal, so that the terminal displays the video program and the caption.

In one possible implementation manner of the second aspect, the receiving a request sent by a terminal and used to obtain a caption corresponding to a video program stream that corresponds to a video program includes: receiving a caption obtaining request sent by the terminal, where the caption obtaining request is used to request obtaining of the caption corresponding to the video program stream; and receiving an audio stream in the video program stream sent by the terminal; and the obtaining the caption corresponding to the video program stream includes: performing speech-to-text conversion on the audio stream according to the caption obtaining request to generate the caption.

In another possible implementation manner, the receiving a request sent by a terminal and used to obtain a caption corresponding to a video program stream that corresponds to a video program includes: receiving a caption obtaining request sent by the terminal, where the caption obtaining request is used to request obtaining of the caption corresponding to the video program stream, and the caption obtaining request carries a program identifier of the video program; and the obtaining the caption corresponding to the video program stream includes: obtaining the caption corresponding to the video program stream according to the caption obtaining request and the program identifier.

In another possible implementation manner, the obtaining the caption corresponding to the video program stream according to the caption obtaining request and the program identifier includes: determining, according to the caption obtaining request, whether a program source where the video program corresponding to the program identifier is located has been connected; and if the program source has been connected, executing the returning the caption to the terminal; otherwise, establishing a connection with the program source and obtaining an audio stream in the video program stream, and performing speech-to-text conversion on the audio stream to generate the caption.

In another possible implementation manner, the method further includes: if establishment of a connection with the program source fails, returning, to the terminal, a connection failure response used to indicate that the connection with the program source fails; receiving an audio stream of the terminal that is sent by the terminal according to the connection failure response; and performing speech-to-text conversion on the audio stream to generate the caption.

In another possible implementation manner, the performing speech-to-text conversion on the audio stream to generate the caption includes: performing speech-to-text conversion on the audio stream to generate the caption corresponding to the video program stream, and setting, in the caption, a packet identifier of an audio packet corresponding to the caption, so that the terminal synchronizes the caption with the audio stream according to the packet identifier of the audio packet.

A third aspect of the present invention provides a terminal, including:
a program receiving unit, configured to receive a video program stream corresponding to a video program;
a real-time caption client, configured to request, from a caption server, obtaining of a caption corresponding to the video program stream, and receive the caption returned by the caption server; and
a program presenting unit, configured to display the video program and the caption.

In one possible implementation manner of the third aspect, the real-time caption client is specifically configured to send a caption obtaining request to the caption server, where the caption obtaining request is used to request obtaining of the caption corresponding to the video program stream; and send an audio stream in the video program stream to the caption server, so that the caption server performs speech-to-text conversion on the audio stream according to the caption obtaining request to generate the caption.

In another possible implementation manner, the real-time caption client is specifically configured to send a caption obtaining request to the caption server, where the caption obtaining request is used to request obtaining of the caption corresponding to the video program stream, and the caption obtaining request carries a program identifier of the video program, so that the caption server determines the caption corresponding to the video program stream according to the caption obtaining request and the program identifier.

In another possible implementation manner, the real-time caption client is further configured to: after sending the caption obtaining request to the caption server, receive a connection failure response sent by the caption server, where the connection failure response is used to indicate that the caption server fails to connect to a program source according to the program identifier to obtain the audio stream, and the program source is used to generate the video program stream; and send the audio stream in the video program stream to the caption server according to the connection failure response, so that the caption server performs speech-to-text conversion on the audio stream to generate the caption.

In another possible implementation manner, the real-time caption client is further configured to: after the video program stream corresponding to the video program is received, buffer the video program stream at least until the caption corresponding to the video program stream and returned by the caption server is received.

In another possible implementation manner, the real-time caption client is further configured to synchronize the caption with the audio stream according to a packet identifier of an audio packet included in the received caption corresponding to the video program stream and returned by the caption server, so that the program presenting unit displays the video program and the caption synchronously.

A fourth aspect of the present invention provides a caption server, including:
a request receiving unit, configured to receive a request sent by a terminal and used to obtain a caption corresponding to a video program stream that corresponds to a video program;
a caption obtaining unit, configured to obtain, according to the request, the caption corresponding to the video program stream; and
a caption sending unit, configured to return the caption to the terminal, so that the terminal displays the video program and the caption.

In one possible implementation manner of the fourth aspect, the request receiving unit is specifically configured to receive a caption obtaining request sent by the terminal, where the caption obtaining request is used to request obtaining of the caption corresponding to the video program stream; and receive an audio stream in the video program stream sent by the terminal; and the caption obtaining unit is specifically configured to perform speech-to-text conversion on the audio stream according to the caption obtaining request to generate the caption.

In another possible implementation manner, the request receiving unit is specifically configured to receive a caption obtaining request sent by the terminal, where the caption obtaining request is used to request obtaining of the caption corresponding to the video program stream, and the caption obtaining request carries a program identifier of the video program; and the caption obtaining unit is specifically configured to obtain the caption corresponding to the video program stream according to the caption obtaining request and the program identifier.

In another possible implementation manner, the caption obtaining unit includes: a determining subunit, configured to determine, according to the caption obtaining request, whether a program source where the video program corresponding to the program identifier is located has been connected, where the caption sending unit is configured to: when the determination result of the determining subunit is that the program source has been connected, execute the returning the caption to the terminal; an obtaining subunit, configured to: when the determination result of the determining subunit is that the program source has not been connected, establish a connection with the program source and obtain an audio stream in the video program stream; and a converting subunit, configured to perform speech-to-text conversion on the audio stream to generate the caption.

In another possible implementation manner, the caption obtaining unit further includes: a feedback subunit, configured to: when the obtaining subunit fails to establish a connection with the program source, return, to the terminal, a connection failure response used to indicate that the connection with the program source fails, where the request receiving unit is further configured to receive the audio stream of the terminal which is sent by the terminal according to the connection failure response, so that the converting subunit performs speech-to-text conversion on the audio stream to generate the caption.

In another possible implementation manner, the converting subunit is further configured to: when performing speech-to-text conversion on the audio stream to generate the caption, set, in the caption, a packet identifier of an audio packet corresponding to the caption, so that the terminal synchronizes the caption with the audio stream according to the packet identifier of the audio packet.

The video processing method, the terminal, and the caption server provided by the present invention bring about the following technical effects: When a video program stream is received, a caption corresponding to the video program stream is obtained from a caption server, and the caption and a video program that corresponds to the video program stream are displayed concurrently, so that the caption is obtained in real time according to the video program.

### BRIEF DESCRIPTION OF DRAWINGS

FIG. 1 is a schematic flowchart of an embodiment of a video processing method according to the present invention;
FIG. 2 is a schematic flowchart of another embodiment of a video processing method according to the present invention;
FIG. 3 is a schematic signaling diagram of another embodiment of a video processing method according to the present invention;
FIG. 4 is a schematic structural diagram of an embodiment of a terminal according to the present invention;
FIG. 5 is a schematic structural diagram of an embodiment of a caption server according to the present invention; and
FIG. 6 is a schematic structural diagram of another embodiment of a caption server according to the present invention.

### DESCRIPTION OF EMBODIMENTS

Video programs mentioned in each embodiment of the present invention include video programs delivered by using multiple manners, for example, digital television (Digital TV, DTV for short), interactive Internet Protocol television (Internet Protocol television, IPTV for short), China Mobile multimedia broadcasting (China Mobile Multimedia Broadcasting, CMMB for short), terrestrial/satellite television, cable television, and Internet video. Terminals mentioned in each embodiment of the present invention include a variety of terminals, for example, a set top box (Set Top Box, STB for short), a smart television (SmartTV), and a mobile terminal.

### Embodiment 1

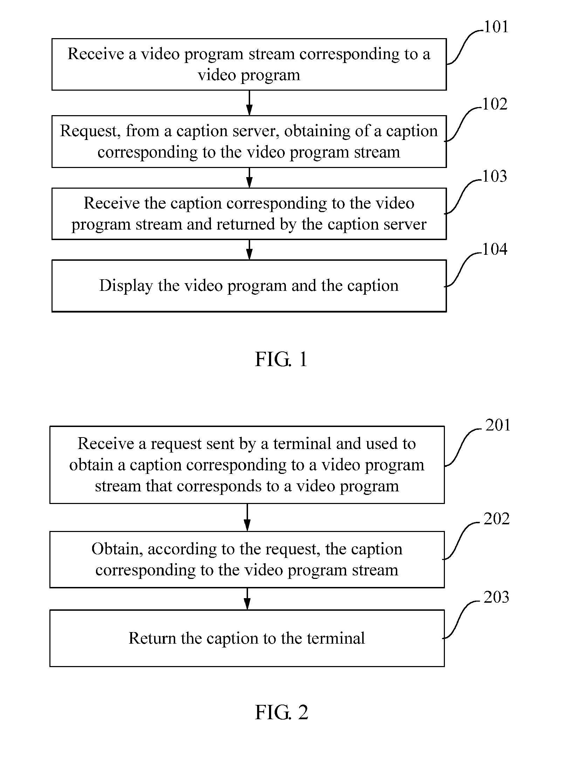

FIG. 1 is a schematic flowchart of an embodiment of a video processing method according to the present invention. This method may be executed by a terminal. As shown in FIG. 1, the video processing method of this embodiment may include the following:
101. Receive a video program stream corresponding to a video program.

The video program may be the foregoing various forms of video programs, and is generally provided by a video provider. For example, some service providers (Service Provider, SP for short) or content providers (Content Provider, CP for short) can provide a video program. In addition, the terminal receives the video program stream corresponding to the video program and sent by the video provider, where the video program stream includes a video stream (that is, picture data in the video program) and an audio stream (that is, sound data in the video program).

102. Request, from a caption server, obtaining of a caption corresponding to the video program stream.

When the terminal receives the video program stream, the terminal does not present the video program stream immediately, for example, it may buffer the video program stream, and request, from the caption server, for example, a cloud-end caption server, obtaining of the caption corresponding to the video program stream within the buffering time; and the caption corresponding to the video program stream actually means that the caption corresponds to an audio stream in the video program stream, for example, the caption is obtained by performing speech-to-text conversion on the audio stream. In addition, the caption and the video program must be presented concurrently.

In this embodiment, the cloud-end caption server, for example, may be a cloud-end caption server provided by a professional provider. Because the cloud end generally has a powerful computing capability, a powerful database storage capacity, and the like, the cloud end can easily extend a speech database and upgrade a speech recognition algorithm, so that the cloud-end caption server has high speech recognition accuracy; and a caption with high recognition accuracy can be quickly obtained from the cloud-end caption server.

103. Receive the caption corresponding to the video program stream and returned by the caption server.

The cloud-end caption server can obtain, according to a caption obtaining request of the terminal, the caption corresponding to the video program stream, and send the caption to the terminal. The caption server obtains the caption by using multiple manners. Generally, the caption server performs speech-to-text conversion on the audio stream, that is, performs speech recognition to obtain the corresponding caption.

104. Display the video program and the caption.

When the terminal receives the caption returned by the cloud-end caption server, the terminal presents the caption and the video program that corresponds to the video program stream concurrently, and displays the video program with the caption.

In the video processing method of this embodiment, when a terminal receives a video program stream, the terminal obtains a corresponding caption from a caption server, and then presents the caption and the video program stream concurrently, so that the caption can be obtained in real time according to the video program. For example, if the terminal receives a video program stream without a caption, the terminal may perform processing according to the method described in this embodiment, and automatically obtain the caption corresponding to the video program stream, which makes it convenient for a user to watch the video program. Optionally, during specific implementation, a switch may be set to control whether to enable a real-time caption obtaining function, which may be controlled by a user of the terminal. If the user does not want to use the real-time caption obtaining function, the user may not enable this function. If the user finds that a video program does not have a caption and wants to enable the real-time caption obtaining function, the user enables the function by using this switch. Then, the terminal can execute the caption obtaining process described in this embodiment.

### Embodiment 2

FIG. 2 is a schematic flowchart of another embodiment of a video processing method according to the present invention. This method may be executed by a caption server. This embodiment uses a case in which this method is executed by a cloud-end caption server as an example. As shown in FIG. 2, the video processing method of this embodiment may include the following:
201. Receive a request sent by a terminal and used to obtain a caption corresponding to a video program stream that corresponds to a video program.

A caption server disposed at a cloud end receives a caption obtaining request sent by a terminal and requesting, from the caption server, obtaining of a caption corresponding to a video program stream.

202. Obtain, according to the request, the caption corresponding to the video program stream.

The caption server obtains the caption by using multiple manners, which will be described in detail in Embodiment 3. A simple example is as follows: For example, if the caption obtaining request that may be received by the caption server and is sent by the terminal carries an audio stream, the caption server directly performs speech-to-text conversion on the audio stream to obtain the caption;
or, if the caption obtaining request that may be received by the caption server and is sent by the terminal carries only a program identifier of the video program, the caption server may connect to a program source according to the program identifier to obtain the audio stream, and then perform speech-to-text conversion on the audio stream to obtain the caption; or, when the caption server receives a program identifier, if the caption server knows, by viewing, that the caption server already stores the caption (this caption may be stored temporarily by the caption server when performing speech recognition for another terminal) of the audio stream corresponding to the program identifier, the caption server directly sends the stored caption to the terminal.

203. Return the caption to the terminal.

The caption server may deliver the caption to the terminal through a caption streaming channel between the caption server and the terminal; if the caption streaming channel is not established in advance, the caption server needs to first negotiate with the terminal to establish the caption streaming channel before delivering the caption. After receiving the caption, the terminal displays the video program and the caption concurrently.

In the video processing method of this embodiment, a cloud-end caption server obtains a caption corresponding to a video program stream, and returns the caption to a terminal, so that the terminal can display the caption and the video program concurrently, thereby implementing the video program with the caption.

### Embodiment 3

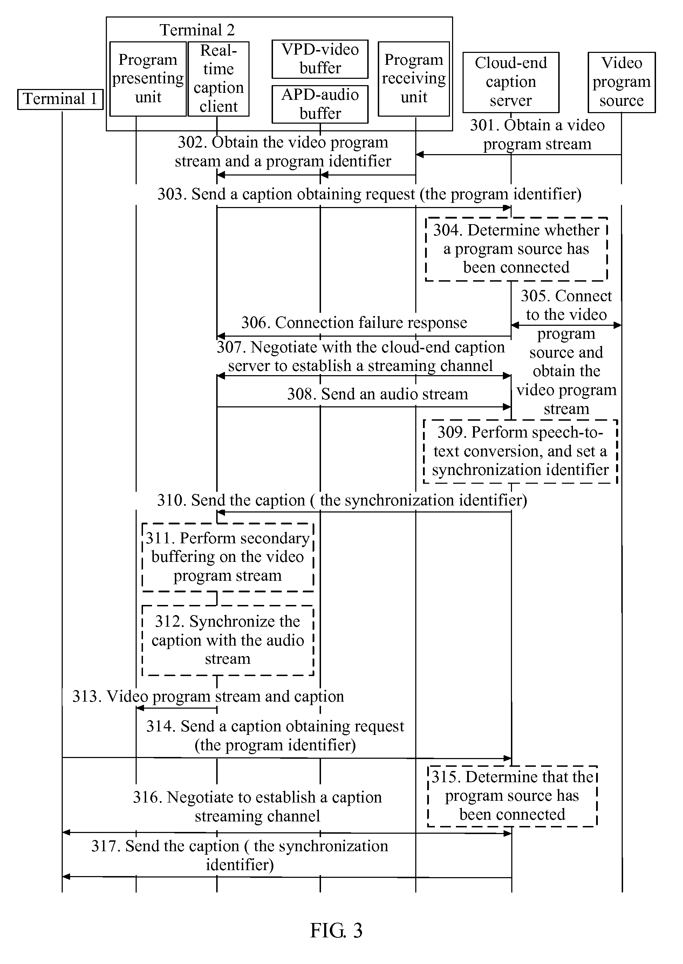

FIG. 3 is a schematic signaling diagram of another embodiment of a video processing method according to the present invention. FIG. 3 illustrates two terminals, namely, terminal 1 and terminal 2, and illustrates a structure of terminal 2, which includes a program presenting unit, a real-time caption client, and a program receiving unit, and may further include a video buffer VPD and an audio buffer APD. Specific functions of each of the foregoing units in terminal 2 will be described in Embodiment 4. To make the video processing method more comprehensible, this embodiment describes how each unit of the terminal participates in the process of the method. Terminal 1 has a same structure as terminal 2, and the structure of terminal 1 is not shown in FIG. 3. As shown in FIG. 3, the method of this embodiment still uses a cloud-end caption server as an example, and the method may include the following:
301. The program receiving unit in terminal 2 obtains a video program stream from a video program source.

The video program stream sent by the video program source to terminal 2 includes a video stream and an audio stream, where the video stream refers to picture data of a video program and the audio stream refers to sound data of the video program.

302. The real-time caption client in terminal 2 receives the video program stream from the program receiving unit, and obtains a program identifier corresponding to the video program.

The real-time caption client is disposed between the program presenting unit and the program receiving unit, and specifically, disposed between an audio and video buffer and the program presenting unit, where the audio and video buffer includes a video buffer VPD and an audio buffer APD. After receiving the video program stream, the program receiving unit performs necessary processing, for example, decryption and descrambling, and then sends the processed video program stream to the audio and video buffer, where the audio and video buffer is mainly used to buffer the video program stream.

In this embodiment, the real-time caption client may be enabled or disabled by a user, for example, the user can enable, by using a remote control, the real-time caption client in terminal 2 to request enabling of a real-time caption function. If the user does not enable the real-time caption client, the video program stream in the audio and video buffer is directly sent to the program presenting unit for displaying; if the user has enabled the real-time caption client, the real-time caption client executes related processing anchored between the program presenting unit and the audio and video buffer, so that all video program streams must reach the real-time caption client before reaching the program presenting unit.

Specifically, the real-time caption client may use a real output interface of the VPD and the APD as an input of the real-time caption client, and change the output interface to another name. Meanwhile, the real-time caption client forges a new output interface of the VPD and the APD as an output of the real-time caption client, so that video program streams subsequently received by the program presenting unit are obtained from the forged output interface of the VPD and the APD, and the program presenting unit does not sense the anchoring of the real-time caption client. After the foregoing processing is completed, the video program streams in the audio and video buffer are sent to the real-time caption client.

In addition, the real-time caption client may further obtain the program identifier of the video program corresponding to the current video program stream, or the video program stream received from the audio and video buffer includes the program identifier. The program identifier, for example, is a ProgramID (so long as it can identify the video program) or a URL. For example, for a DTV program or an IPTV program, the program identifier may be a ProgramID; for an Internet video, the program identifier may be a URL.

303. The real-time caption client in terminal 2 sends a caption obtaining request to the cloud-end caption server, where the caption obtaining request carries the program identifier.

In this embodiment, the cloud-end caption server is used to obtain the caption. Because the cloud end has a powerful computing capability, the cloud end can easily upgrade a recognition algorithm, so that accurate recognition of a caption, recognition of multiple languages, and recognition of multiple accents/dialects can be implemented, and the real-time speech-to-text conversion has high accuracy, thereby achieving optimal user experience. The cloud-end caption server may be a caption server provided by a professional provider, and can implement a function of providing a real-time caption for video programs (for example, terrestrial/satellite TV, cable TV, IPTV, Internet video) of all sources.

In this embodiment, the caption obtaining request sent by the real-time caption client to the cloud-end caption server may carry the program identifier (for example, the ProgramID or the URL) obtained in 302, and the caption obtaining request may be borne through an HTTP message, and a message body of the HTTP message may be implemented in an XML manner. If the caption obtaining request carries the program identifier, the process goes to 304.

Optionally, while sending a caption obtaining request, the real-time caption client also sends an audio stream in the video program stream to the caption server. In this way, the process may skip to 309, that is, the caption server directly performs speech-to-text conversion on the audio stream to generate the corresponding caption.

304. The cloud-end caption server determines whether the video program source where the video program corresponding to the program identifier is located has been connected.

After receiving the caption obtaining request sent by terminal 2, the cloud-end caption server determines, according to the program identifier carried in the caption obtaining request, whether the caption server has been connected to the video program source where the video program corresponding to the program identifier is located.

If the caption server has been connected to the video program source, it indicates that the caption server is providing a caption service (perhaps is providing a caption service for another terminal) for the video program corresponding to the program identifier. In this case, the caption server negotiates a caption streaming channel with terminal 2 to deliver the caption, and the process skips to 310, that is, the caption server delivers the caption to terminal 2. At this time, if the caption requested by terminal 2 is the caption that has been converted by the caption server, the caption server may extract, according to the program identifier, the caption from captions stored in the caption server. If the caption server has not been connected to the video program source, the process goes to 305.

305. The cloud-end caption server establishes a connection with the video program source, and obtains the audio stream.

In this embodiment, if the cloud-end caption server determines that the caption server has not been connected to the video program source in 304, the caption server sends a connection request to the video program source according to the program identifier, where the connection request may carry the program identifier, and obtains a video program stream corresponding to the program identifier from the video program source or obtains at least an audio stream from the video program stream. Otherwise, if the cloud-end caption server fails to establish a connection with the video program source, the process goes to 306.

If the video program can be obtained for free or a provider of the caption server has a cooperation relationship with a provider of the video program source and the caption server is allowed to obtain a video program from the video program source freely, the video program stream of the video program or only the audio stream is sent to the caption server.

306. The cloud-end caption server returns a connection failure response to terminal 2.

The connection failure response is used to indicate that the cloud-end caption server fails to connect to the video program source, and the caption server returns the connection failure response to terminal 2.

307. Terminal 2 negotiates with the cloud-end caption server to establish a streaming channel.

After the real-time caption client in terminal 2 receives the connection failure response, the real-time caption client needs to negotiate with the cloud-end caption server to establish a streaming channel, where the streaming channel includes an uplink audio streaming channel (RTP bearer) and a downlink caption streaming channel (RTP bearer or FLUTE bearer). A specific method for negotiating a streaming channel may be negotiated by using an SDP offer/answer manner.

308. Terminal 2 sends an audio stream to the cloud-end caption server.

After the streaming channel is successfully negotiated in 307, the real-time caption client in terminal 2 sends an audio stream to the cloud-end caption server, where the audio stream may be previously obtained by the real-time caption client from the audio buffer APD.

309. The cloud-end caption server performs speech-to-text conversion on the audio stream to generate the caption, and sets a synchronization identifier in the caption.

To ensure accurate synchronous displaying of captions and pictures of the video program and avoid a phenomenon of an advance or a delay, the cloud-end caption server in this embodiment sets a synchronization identifier in the caption when performing real-time speech-to-text conversion on the audio stream, where the synchronization identifier specifically uses a packet identifier of an audio packet corresponding to the caption.

For example, the caption server may insert, at the beginning of each caption, a packet identifier, that is, a Packet ID of an audio packet corresponding to a first word of each caption, so that subsequently, terminal 2 can synchronize the caption with the audio stream according to the packet identifier of the audio packet.

310. The cloud-end caption server returns the caption to terminal 2, where the caption carries the synchronization identifier.

The caption server delivers, through a caption streaming channel, the caption obtained by real-time conversion to the real-time caption client in terminal 2, where the caption may be a text caption, and also sends the synchronization identifier set in 309 to the real-time caption client.

311. Terminal 2 performs secondary buffering on the video program stream.

Because the caption is generated on the cloud-end caption server, after the caption reaches terminal 2, the caption has a delay, as compared with the video program stream initially received by terminal 2. Therefore, to ensure the synchronization between the video picture and the caption, the real-time caption client in terminal 2 needs to perform buffering (which may be called secondary buffering) on the received original video program stream to implement a particular delay (for example, 10 seconds), where the delay lasts at least until the caption is received. In this way, a delay caused when the caption is generated and delivered is offset, thereby ensuring that an inherent delay of the caption does not cause asynchronization between the picture and the caption.

312. Terminal 2 synchronizes the caption with the audio stream according to the synchronization identifier.

The real-time caption client in terminal 2 can synchronize the caption with the audio stream according to the packet identifier, that is, the Packet ID of the audio packet in the caption. Because the audio stream and the video stream are already synchronized, after the foregoing synchronization between the caption and the audio stream, it can be ensured that the caption and the video picture are displayed synchronously.

313. The real-time caption client in terminal 2 sends the video program stream and the caption to the program presenting unit, so that the program presenting unit displays the video program and the caption concurrently.

The real-time caption client in terminal 2 sends the video program stream superposed with the caption to the program presenting module, so that the user can watch a video with the caption at this time.

Now, the process of terminal 2 ends. The following 314 to 317 are a process of terminal 1 in a case where terminal 2 is executing the foregoing caption obtaining process and another terminal 1 also requests obtaining of a real-time caption. The process of terminal 1 is briefly described, and the working principles are basically the same as the caption obtaining process of terminal 2. For details, reference may be made to the foregoing steps.

314. Terminal 1 requests obtaining of a real-time caption, where the request may carry a program identifier.

315. The cloud-end caption server finds, according to the program identifier, that a caption of a video program corresponding to the program identifier has been generated on a real-time basis.

316. The cloud-end caption server negotiates a downlink caption streaming channel with terminal 1. Because terminal 1 does not use an uplink audio stream at this time, only a downlink caption streaming channel is negotiated.

317. The cloud-end caption server delivers the caption to terminal 1, and may also add a synchronization identifier in the caption. After terminal 1 receives the caption subsequently, terminal 1 superposes, according to the synchronization identifier, the caption in the video program stream for displaying.

In the video processing method of this embodiment, a cloud-end caption server obtains a caption corresponding to a video program stream, and returns the caption to a terminal, so that the terminal can display the caption and the video program concurrently, thereby implementing the video program with the caption.

### Embodiment 4

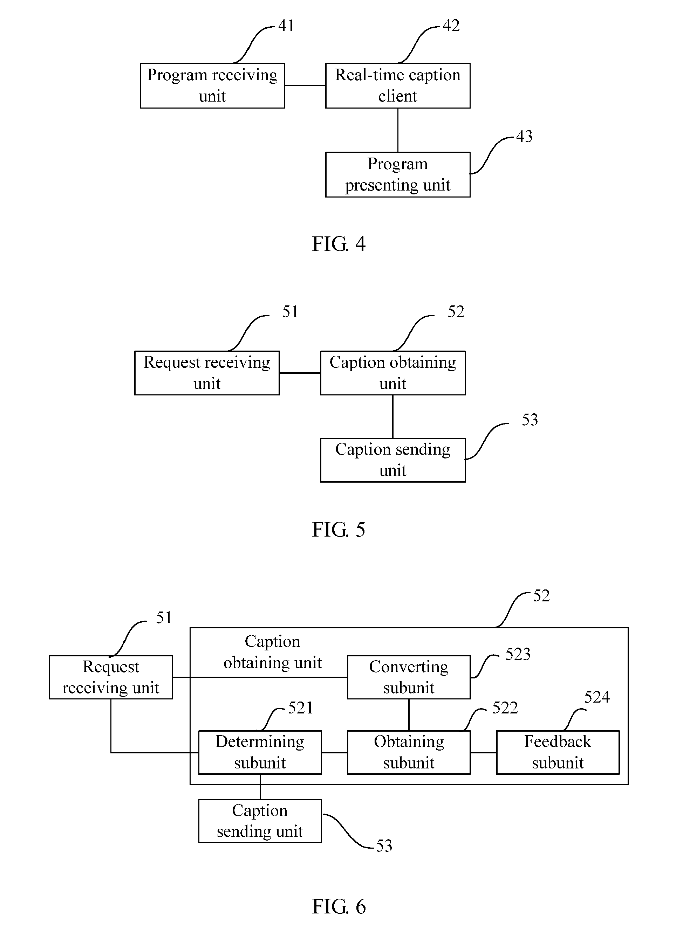

FIG. 4 is a schematic structural diagram of an embodiment of a terminal according to the present invention. The terminal can execute the video processing method in any embodiment of the present invention. The structure of the terminal is only briefly described in this embodiment. For details about the structure and working principles of the terminal, reference may be made to the description of any method embodiment of the present invention.

As shown in FIG. 4, the terminal of this embodiment may include a program receiving unit 41, a real-time caption client 42, and a program presenting unit 43, where:
the program receiving unit 41 is configured to receive a video program stream corresponding to a video program, where the video program stream includes a video stream and an audio stream;
the real-time caption client 42 is configured to request, from a caption server, obtaining of a caption corresponding to the video program stream, and receive the caption returned by the caption server; and
the program presenting unit 43 is configured to display the video program and the caption.

Further, the real-time caption client 42 is specifically configured to send a caption obtaining request to the caption server, where the caption obtaining request is used to request obtaining of the caption corresponding to the video program stream; and send the audio stream in the video program stream to the caption server, so that the caption server performs speech-to-text conversion on the audio stream according to the caption obtaining request to generate the caption.

Further, the real-time caption client 42 is specifically configured to send a caption obtaining request to the caption server, where the caption obtaining request is used to obtain the caption corresponding to the video program stream, and the caption obtaining request carries a program identifier of the video program, so that the caption server determines the caption corresponding to the video program stream according to the caption obtaining request and the program identifier.

Further, the real-time caption client 42 is further configured to: after sending the caption obtaining request to the caption server, receive a connection failure response sent by the caption server, where the connection failure response is used to indicate that the caption server fails to connect to a program source according to the program identifier to obtain the audio stream, and the program source is used to generate the video program stream; and send the audio stream in the video program stream to the caption server according to the connection failure response, so that the caption server performs speech-to-text conversion on the audio stream to generate the caption.

Further, the real-time caption client 42 is further configured to: after the video program stream corresponding to the video program is received, buffer the video program stream at least until the caption corresponding to the video program stream and returned by the caption server is received.

Further, the real-time caption client 42 is further configured to synchronize the caption with the audio stream according to a packet identifier of an audio packet included in the received caption that corresponds to the video program stream and is returned by the caption server, so that the program presenting unit displays the video program and the caption synchronously.

### Embodiment 5

This embodiment provides a caption server, where the caption server can execute the video processing method in any embodiment of the present invention. A structure of the caption server is only briefly described in this embodiment. For details about the structure and working principles of the caption server, reference may be made to any method embodiment of the present invention.

FIG. 5 is a schematic structural diagram of an embodiment of a caption server according to the present invention. As shown in FIG. 5, the caption server of this embodiment may include a request receiving unit 51, a caption obtaining unit 52, and a caption sending unit 53, where:
the request receiving unit 51 is configured to receive a request sent by a terminal and used to obtain a caption corresponding to a video program stream that corresponds to a video program, where the video program stream includes a video stream and an audio stream;
the caption obtaining unit 52 is configured to obtain, according to the request, the caption corresponding to the video program stream; and
the caption sending unit 53 is configured to return the caption to the terminal, so that the terminal displays the video program and the caption.

FIG. 6 is a schematic structural diagram of another embodiment of a caption server according to the present invention. As shown in FIG. 6, the caption server of this embodiment is based on the structure shown in FIG. 5.

Further, the request receiving unit 51 is specifically configured to receive a caption obtaining request sent by the terminal, where the caption obtaining request is used to request obtaining of the caption corresponding to the video program stream; and receive an audio stream in the video program stream sent by the terminal; and the caption obtaining unit 52 is specifically configured to perform speech-to-text conversion on the audio stream according to the caption obtaining request to generate the caption.

Further, the request receiving unit 51 is specifically configured to receive a caption obtaining request sent by the terminal, where the caption obtaining request is used to request obtaining of the caption corresponding to the video program stream, and the caption obtaining request carries a program identifier of the video program; and the caption obtaining unit 52 is specifically configured to obtain the caption corresponding to the video program stream according to the caption obtaining request and the program identifier.

Further, the caption obtaining unit 52 includes a determining subunit 521, an obtaining subunit 522, and a converting subunit 523, and may further include a feedback subunit 524, where:
the determining subunit 521 is configured to determine, according to the caption obtaining request, whether a program source where the video program corresponding to the program identifier is located has been connected, where
the caption sending unit 53 is configured to: when the determination result of the determining subunit is that the program source has been connected, execute the returning the caption to the terminal, and the caption sending unit 53 is further configured to: when the caption server has stored captions corresponding to video program streams, obtain the caption directly from the stored captions, and send the caption;
the obtaining subunit 522 is configured to: when the determination result of the determining subunit is that the program source has not been connected, establish a connection with the program source and obtain the audio stream in the video program stream;
the converting subunit 523 is configured to perform speech-to-text conversion on the audio stream to generate the caption; and the converting subunit 523 may perform speech-to-text conversion on the audio stream obtained by the obtaining subunit 522 from the program source, or when the caption obtaining request received by the request receiving unit 51 carries the audio stream, the converting subunit 523 directly performs speech-to-text conversion on the audio stream; and
the feedback subunit 524 is configured to: when the obtaining subunit fails to establish a connection with the program source, return, to the terminal, a connection failure response used to indicate that the connection with the program source fails, where
the request receiving unit 51 is further configured to receive the audio stream of the terminal which is sent by the terminal according to the connection failure response, so that the converting subunit performs speech-to-text conversion on the audio stream to generate the caption.

Further, the converting subunit 523 is further configured to: when performing speech-to-text conversion on the audio stream to generate the caption, set, in the caption, a packet identifier of an audio packet corresponding to the caption, so that the terminal synchronizes the caption with the audio stream according to the packet identifier of the audio packet.

Persons of ordinary skill in the art may understand that all or a part of the steps of the method embodiments may be implemented by a program instructing relevant hardware. The program may be stored in a computer readable storage medium. When the program runs, the steps of the method embodiments are performed. The foregoing storage medium includes: any medium that can store program code, such as a ROM, a RAM, a magnetic disk, or an optical disc.

Finally, it should be noted that the foregoing embodiments are merely intended for describing the technical solutions of the present invention rather than limiting the present invention. Although the present invention is described in detail with reference to the foregoing embodiments, persons of ordinary skill in the art should understand that they may still make modifications to the technical solutions described in the foregoing embodiments or make equivalent replacements to some or all technical features thereof, as long as such modifications or replacements do not cause the essence of corresponding technical solutions to depart from the scope of the technical solutions of the embodiments of the present invention.

## Claims

1. A video processing method, comprising:
receiving a video program stream corresponding to a video program, and requesting, from a caption server, obtaining of a caption corresponding to the video program stream; and
receiving the caption returned by the caption server, and displaying the video program and the caption.

2. The video processing method according to claim 1, wherein the requesting, from a caption server, obtaining of a caption corresponding to the video program stream comprises:
sending a caption obtaining request to the caption server, wherein the caption obtaining request is used to request obtaining of the caption corresponding to the video program stream; and sending an audio stream in the video program stream to the caption server, so that the caption server performs speech-to-text conversion on the audio stream according to the caption obtaining request to generate the caption.

3. The video processing method according to claim 1, wherein: the received video program stream further comprises a program identifier of the video program; and
the requesting, from a caption server, obtaining of a caption corresponding to the video program stream comprises:
sending a caption obtaining request to the caption server, wherein the caption obtaining request is used to request obtaining of the caption corresponding to the video program stream, and the caption obtaining request carries the program identifier, so that the caption server determines the caption according to the caption obtaining request and the program identifier.

4. The video processing method according to claim 3, wherein after the sending a caption obtaining request to the caption server and before the receiving the caption returned by the caption server, the method further comprises:
receiving a connection failure response sent by the caption server, wherein the connection failure response is used to indicate that the caption server fails to connect to a program source according to the program identifier to obtain the audio stream, and the program source is used to generate the video program stream; and
sending the audio stream in the video program stream to the caption server according to the connection failure response, so that the caption server performs speech-to-text conversion on the audio stream to generate the caption.

5. The video processing method according to any one of claims 1 to 4, wherein after the receiving a video program stream corresponding to a video program and before the displaying the video program and the caption, the method further comprises:
buffering the received video program stream corresponding to the video program at least until the caption corresponding to the video program stream and returned by the caption server is received.

6. The video processing method according to any one of claims 1 to 5, wherein: the received caption corresponding to the video program stream and returned by the caption server further comprises a packet identifier of an audio packet corresponding to the caption; and
after the receiving the caption corresponding to the video program stream and returned by the caption server and before the displaying the video program and the caption, the method further comprises: synchronizing the caption with the audio stream according to the packet identifier of the audio packet, so as to display the video program and the caption synchronously.

7. A video processing method, comprising:
receiving a request sent by a terminal and used to obtain a caption corresponding to a video program stream that corresponds to a video program; and
obtaining, according to the request, the caption corresponding to the video program stream, and returning the caption to the terminal, so that the terminal displays the video program and the caption.

8. The video processing method according to claim 7, wherein:
the receiving a request sent by a terminal and used to obtain a caption corresponding to a video program stream that corresponds to a video program comprises:
receiving a caption obtaining request sent by the terminal, wherein the caption obtaining request is used to request obtaining of the caption corresponding to the video program stream; and receiving an audio stream in the video program stream sent by the terminal; and
the obtaining the caption corresponding to the video program stream comprises:
performing speech-to-text conversion on the audio stream according to the caption obtaining request to generate the caption.

9. The video processing method according to claim 7, wherein:
the receiving a request sent by a terminal and used to obtain a caption corresponding to a video program stream that corresponds to a video program comprises:
receiving a caption obtaining request sent by the terminal, wherein the caption obtaining request is used to request obtaining of the caption corresponding to the video program stream, and the caption obtaining request carries a program identifier of the video program; and
the obtaining the caption corresponding to the video program stream comprises:
obtaining the caption corresponding to the video program stream according to the caption obtaining request and the program identifier.

10. The video processing method according to claim 9, wherein the obtaining the caption corresponding to the video program stream according to the caption obtaining request and the program identifier comprises:
determining, according to the caption obtaining request, whether a program source where the video program corresponding to the program identifier is located has been connected; and
if the program source has been connected, executing the returning the caption to the terminal; otherwise, establishing a connection with the program source and obtaining an audio stream in the video program stream, and performing speech-to-text conversion on the audio stream to generate the caption.

11. The video processing method according to claim 10, further comprising:
if establishment of a connection with the program source fails, returning, to the terminal, a connection failure response used to indicate that the connection with the program source fails; receiving an audio stream of the terminal that is sent by the terminal according to the connection failure response; and performing speech-to-text conversion on the audio stream to generate the caption.

12. The video processing method according to claim 8 or 10, wherein the performing speech-to-text conversion on the audio stream to generate the caption comprises:
performing speech-to-text conversion on the audio stream to generate the caption corresponding to the video program stream, and setting, in the caption, a packet identifier of an audio packet corresponding to the caption, so that the terminal synchronizes the caption with the audio stream according to the packet identifier of the audio packet.

13. A terminal, comprising:
a program receiving unit, configured to receive a video program stream corresponding to a video program;
a real-time caption client, configured to request, from a caption server, obtaining of a caption corresponding to the video program stream, and receive the caption returned by the caption server; and
a program presenting unit, configured to display the video program and the caption.

14. The terminal according to claim 13, wherein:
the real-time caption client is specifically configured to send a caption obtaining request to the caption server, wherein the caption obtaining request is used to request obtaining of the caption corresponding to the video program stream; and send an audio stream in the video program stream to the caption server, so that the caption server performs speech-to-text conversion on the audio stream according to the caption obtaining request to generate the caption.

15. The terminal according to claim 13, wherein:
the real-time caption client is specifically configured to send a caption obtaining request to the caption server, wherein the caption obtaining request is used to obtain the caption corresponding to the video program stream, and the caption obtaining request carries a program identifier of the video program, so that the caption server determines the caption corresponding to the video program stream according to the caption obtaining request and the program identifier.

16. The terminal according to claim 15, wherein:
the real-time caption client is further configured to: after sending the caption obtaining request to the caption server, receive a connection failure response sent by the caption server, wherein the connection failure response is used to indicate that the caption server fails to connect to a program source according to the program identifier to obtain the audio stream, and the program source is used to generate the video program stream; and send the audio stream in the video program stream to the caption server according to the connection failure response, so that the caption server performs speech-to-text conversion on the audio stream to generate the caption.

17. The terminal according to any one of claims 13 to 16, wherein:
the real-time caption client is further configured to: after the video program stream corresponding to the video program is received, buffer the video program stream at least until the caption corresponding to the video program stream and returned by the caption server is received.

18. The terminal according to any one of claims 13 to 17, wherein:
the real-time caption client is further configured to synchronize the caption with the audio stream according to a packet identifier of an audio packet comprised in the received caption corresponding to the video program stream and returned by the caption server, so that the program presenting unit displays the video program and the caption synchronously.

19. A caption server, comprising:
a request receiving unit, configured to receive a request sent by a terminal and used to obtain a caption corresponding to a video program stream that corresponds to a video program;
a caption obtaining unit, configured to obtain, according to the request, the caption corresponding to the video program stream; and
a caption sending unit, configured to return the caption to the terminal, so that the terminal displays the video program and the caption.

20. The caption server according to claim 19, wherein:
the request receiving unit is specifically configured to receive a caption obtaining request sent by the terminal, wherein the caption obtaining request is used to request obtaining of the caption corresponding to the video program stream; and receive an audio stream in the video program stream sent by the terminal; and
the caption obtaining unit is specifically configured to perform speech-to-text conversion on the audio stream according to the caption obtaining request to generate the caption.

21. The caption server according to claim 19, wherein:
the request receiving unit is specifically configured to receive a caption obtaining request sent by the terminal, wherein the caption obtaining request is used to request obtaining of the caption corresponding to the video program stream, and the caption obtaining request carries a program identifier of the video program; and
the caption obtaining unit is specifically configured to obtain the caption corresponding to the video program stream according to the caption obtaining request and the program identifier.

22. The caption server according to claim 21, wherein the caption obtaining unit comprises:
a determining subunit, configured to determine, according to the caption obtaining request, whether a program source where the video program corresponding to the program identifier is located has been connected, wherein
the caption sending unit is configured to: when the determination result of the determining subunit is that the program source has been connected, execute the returning the caption to the terminal;
an obtaining subunit, configured to: when the determination result of the determining subunit is that the program source has not been connected, establish a connection with the program source and obtain an audio stream in the video program stream; and
a converting subunit, configured to perform speech-to-text conversion on the audio stream to generate the caption.

23. The caption server according to claim 22, wherein the caption obtaining unit further comprises:
a feedback subunit, configured to: when the obtaining subunit fails to establish a connection with the program source, return, to the terminal, a connection failure response used to indicate that the connection with the program source fails, wherein
the request receiving unit is further configured to receive the audio stream of the terminal which is sent by the terminal according to the connection failure response, so that the converting subunit performs speech-to-text conversion on the audio stream to generate the caption.

24. The caption server according to claim 22, wherein:
the converting subunit is further configured to: when performing speech-to-text conversion on the audio stream to generate the caption, set, in the caption, a packet identifier of an audio packet corresponding to the caption, so that the terminal synchronizes the caption with the audio stream according to the packet identifier of the audio packet.
